# EUROPÄISCHE PATENTSCHRIFT

(11) **EP 3 000 301 B1**
(45) Veröffentlichungstag und Bekanntmachung des Hinweises auf die Patenterteilung: **22.08.2018**
(21) Anmeldenummer: 15174518.9
(22) Anmeldetag: 30.06.2015
(51) Int. Cl.: A01D 41/12

(54) **SELBSTFAHRENDER MÄHDRESCHER**
SELF-PROPELLED COMBINE HARVESTER
MOISSONNEUSE-BATTEUSE AUTOMOTRICE

(30) Priorität: 25.09.2014 DE 102014113876
(43) Veröffentlichungstag der Anmeldung: 30.03.2016
(73) Patentinhaber: CLAAS Selbstfahrende Erntemaschinen GmbH, 33428 Harsewinkel (DE)
(72) Erfinder: Strieker, Norbert, 33415 Verl (DE); Stiller, Thorsten, 32791 Lage (DE); Heitmann, Christoph, 48231 Warendorf (DE); Vieregge, Christopher, 32694 Dörentrup (DE)

(56) Entgegenhaltungen:
- EP-A1- 1 277 387
- EP-A2- 1 514 466
- US-A1- 2014 162 739

## Beschreibung

Die Erfindung betrifft einen selbstfahrenden Mähdrescher mit einem heckseitigen Austritt für ein Stroh-Spreu-Gemisch, welches über eine aus wenigstens einer angetriebenen Schleudereinrichtung, insbesondere aus wenigstens zwei angetriebenen Schleudereinrichtungen, bestehende Streueinrichtung, die dem Austritt nachgeordnet ist, über die Arbeitsbreite des Mähdreschers verteilt wird, wobei an jeder der Schleudereinrichtungen zur Lenkung des Gutstromes eine aus zumindest zwei verstellbaren Streublechen bestehende radiale Teilummantelung angeordnet ist und wobei die Streubleche über eine Verstelleinrichtung zueinander und in Bezug auf den jeweiligen Teilbereich eines Außenmantels der Schleudereinrichtung fortlaufend verstellbar sind, wobei die mit unterschiedlichem radialen Abstand zu den Schleudereinrichtungen angeordneten Streubleche partiell oder insgesamt übereinander geschoben werden.

Bei der Getreide- oder Rapsernte mittels eines Mähdreschers wird das von einem Schneidwerk bodennah abgeschnittene Erntegut aufgenommen und über einen Schrägförderer in eine Dresch- und Trenneinrichtung gefördert. Von dort aus gelangt das ausgedroschene Stroh in eine Einrichtung zur Restkornabscheidung, die in der Regel als eine Anzahl von Hordenschüttlern ausgebildet ist. Die Hordenschüttler werden schwingend bewegt und weisen Fallstufen sowie Schüttlerrücklauftaschen auf, über die das aus dem Stroh abgeschiedene Restkorn gemeinsam mit Verunreinigungen auf einen geriffelten Rücklaufboden gelangt. Es sind aber auch Axialflusssysteme zur Restkornabscheidung bekannt, bei denen die Einrichtung zumindest einen in axialer Richtung fördernden Rotor und einen diesen teilweise umschließenden Abscheidekorb aufweist. Dabei wird das aus einem Tangentialdreschwerk austretende Stroh über eine Strohwendetrommel dem in Längsrichtung des Mähdreschers verlaufenden Abscheidekorb zugeführt. Anschließend wird das Stroh mittels des Rotors unter Abscheidung des Restkorns durch den Abscheidekorb gefördert und verlässt diesen schließlich am Heck des Mähdreschers. Schließlich besteht auch die Möglichkeit, eine Gesamtanordnung eines Dreschwerks und einer Einrichtung zur Restkornabscheidung in Form eines Axialflusssystems vorzusehen.

Handelt es sich bei dem austretenden Stroh um ausgedroschene Rapsstängel, so werden diese generell mittels eines Anbau- bzw. Strohhäckslers in feine Bestandteile zerhäckselt. Wird mit dem Mähdrescher Getreide geerntet, so kann das aus der Einrichtung zur Restkornabscheidung austretende Stroh ebenfalls über einen entsprechenden Strohhäcksler zerkleinert werden, oder es wird ungehäckselt als Schwad auf den Stoppeln abgelegt, so dass dieses im Schwad abgelegte Stroh anschließend in einem weiteren Arbeitsgang von einer mit einer Pick-up versehenen Ballenpresse aufgenommen werden kann.

Der Strohhäcksler, der aus einem Rotor mit einer Vielzahl von umlaufenden Messern und einem Korb mit feststehenden Gegenmessern besteht, ist zu diesem Zweck zu- und abschaltbar und kann aus einer Arbeitsposition heraus in eine Ruheposition verschwenkt werden, in der die zuvor erläuterte Schwadablage des Strohs erfolgen kann. Ein entsprechender Schwad würde auch dann entstehen, wenn das Stroh-Spreu-Gemisch unmittelbar mittels des Strohhäckslers ausgebracht wird, da dann, bezogen auf die gesamte Arbeitsbreite des Schneidwerks, nur ein schmaler Streifen von dem Stroh-Spreu-Gemisch bedeckt wäre. Auch dieser aus Häckselgut bestehende relativ dicke Schwad kann bei der anschließenden Bodenbearbeitung in unerwünschter Weise Strohnester im Boden bilden. Aus diesem Grund ist dem Strohhäcksler eine Streueinrichtung nachgeordnet, die vertikal verlaufende oder unter einem Winkel zur Vertikalen geneigte Antriebsachsen mit daran befestigten Scheiben oder Trommeln sowie an diesen befestigte Wurfschaufeln aufweist. Dadurch soll eine gleichmäßige Verteilung des Strohs oder des Strohhäcksels über die Arbeitsbreite des Erntevorsatzes erzielt werden. Die Streueinrichtung kann mit zumindest einer Schleudereinrichtung, insbesondere wenigstens zwei Schleudereinrichtungen, versehen sein.

Die Anordnung einer Vorrichtung zum Verteilen von Stroh gemäß der vorliegenden Erfindung ist von wesentlicher Bedeutung für den Betrieb des Mähdreschers mit oder ohne Strohhäcksler. Im Hinblick auf die nach der Ernte durchzuführende Bodenbearbeitung ist es erforderlich, das Stroh, sei es gehäckselt oder ungehäckselt, gleichmäßig über die abgeerntete Fläche zu verteilen, damit es, wie dargelegt, gleichmäßig in den Boden eingearbeitet werden und dort verrotten kann. Die zuvor erwähnten Strohnester, die durch eine ungleichmäßige Strohverteilung entstehen, würden anderenfalls die Bodengare in erheblichem Umfang negativ beeinflussen.

Das zerkleinerte Stroh-Spreu-Gemisch soll möglichst gleichmäßig auf der vom Mähdrescher abgeernteten Fläche abgelegt werden, um bei der nachfolgenden Bodenbearbeitung gleichmäßig in den Boden eingearbeitet werden zu können. Es ist allerdings zu berücksichtigen, dass moderne Mähdrescher zur Erzielung einer hohen Flächenleistung mit Schneidwerken versehen sind, die eine große Arbeitsbreite aufweisen, an die die Streubreite der Streueinrichtung anzupassen ist.

Um unter allen Erntebedingungen eine möglichst gleichmäßige Verteilung des Stroh-Spreu-Gemisches auf den abgeernteten Stoppeln zu erzielen, wird im Fall von paarweise gegenläufig angetriebenen Schleudereinrichtungen zum einen ein zwischen den Rotoren angeordnetes V-förmiges Guttrennblech zugeordnet, und zum anderen wird der Streubereich eines jeden der Rotoren fortlaufend in einem bestimmten Zyklus verändert. Zu diesem Zweck sind verstellbare Streubleche vorgesehen, die am Außenmantel der zumindest zwei Schleudereinrichtungen konzentrisch zu diesen verlaufen und fortlaufend sowohl ihre Position zu der Schleudereinrichtung als auch zueinander verändern. Diese ein Segment einer Ummantelung der jeweiligen Schleudereinrichtung bildenden Streubleche werden dabei teleskopisch, also fächerartig zueinander verstellt, das heißt, die mit unterschiedlichem radialen Abstand zu der Streueinrichtung angeordneten Streubleche können partiell oder insgesamt übereinander geschoben werden. Daraus ergibt sich, dass die Streubleche in einer ersten Endstellung einen großen Schleuderbereich der Schleudereinrichtung freigeben und in einer zweiten Endstellung einen maximalen Teilbereich desselben abdecken. Diese Verstellung erfolgt mit sehr hoher Geschwindigkeit.

Ein selbstfahrender Mähdrescher der im Oberbegriff des Patentanspruchs 1 angegebenen Gattung ist aus der EP 1 277 387 A1 bekannt. Der Mähdrescher weist in seinem heckseitigen Bereich eine mit einem Austritt versehene Strohausfallhaube auf, unterhalb welcher sich eine dem Austritt nachgeordnete Strohhäckseleinrichtung befindet. Das von den Häckselmessern zerkleinerte Stroh wird zwei gegenläufig rotierenden Wurfgebläsen, die mit Wurfschaufeln besetzt sind, zugeführt. Zwischen den beiden als Streueinrichtungen dienenden Wurfgebläsen ist ein mit seiner Spitze gegen die Gutförderrichtung gerichtetes Guttrennblech, das den Strom des gehäckselten Strohs auf die beiden Wurfgebläse aufteilt, angeordnet. An diese Guttrennbleche schließen sich pro Schleudereinrichtung zwei in unterschiedlichen Ebenen radial zu der Schleudereinrichtung verlaufende Streubleche an, die jeweils über Arme an einer Quertraverse angelenkt sind. Ein Streubereich der Wurfgebläse wird zyklisch verändert, indem sich die Streubleche teleskopartig zueinander bewegen und in einer Endstellung, in welcher sie einen maximalen Querschnitt der Mantelflächen der Wurfgebläse freigeben, in den Bereich des Guttrennbleches bewegt werden. Die entsprechende zyklische Verstellung der Streubleche erfolgt dabei über einen rotierenden Exzenter, der an einem mechanischen Abtrieb ausgebildet ist und an den sich ein aus mehreren Hebeln und Koppelstangen bestehendes Antriebssystem anschließt. Gemäß einer Ausgestaltungsform dieses Antriebssystems soll weiterhin ein Spindeltrieb vorgesehen sein, über den sich der Schwenkwinkel der beiden Streubleche verändern lässt.

Es ist Aufgabe der vorliegenden Erfindung, den Antrieb der wenigstens einen Streueinrichtung zu verbessern und dabei Möglichkeiten zu schaffen, dass im Hinblick auf die jeweiligen Erntebedingungen die Wirkungsweise der entsprechenden Streublecheinheiten variiert werden können.

Diese Aufgabe wird an einem selbstfahrenden Mähdrescher der im Oberbegriff des Patentanspruchs 1 angegebenen Gattung durch die Merkmale des kennzeichnenden Teils des Patentanspruchs 1 gelöst. Die vom Patentanspruch 1 abhängigen Patentansprüche beinhalten erfindungsgemäße Weiterbildungen dieser Lösung.

Danach soll die Verstelleinrichtung einen oszillierend bewegten Linearantrieb mit einer in diesen integrierten mechanischen Wegrückführung aufweisen. Die integrierte mechanische Wegrückführung ist als ein Mittel ausgeführt, welches kinetische Energie in Form potentieller Energie zwischenspeichern und wieder freigeben kann. Um eine optimale Verteilung des Strohs auf der gesamten Arbeitsbreite des Mähdreschers zu erreichen, können verschiedene Parameter der Streueinrichtung beeinflusst werden. Zunächst besteht die Möglichkeit, verschiedene Pendelkurven der Streubleche mittels einer Steuereinrichtung vorzugeben. Diese Pendel- oder Verteilkurve kann beispielsweise einen sinusförmigen Verlauf aufweisen, wobei der Linearantrieb Ein- und Ausfahrbewegungen mit gleicher Geschwindigkeit ausführt. Daraus resultiert eine sinusförmige Pendelkurve.

Alternativ dazu kann der Linearantrieb aber auch eine Ausfahrbewegung mit hoher Geschwindigkeit ausführen und anschließend für eine Phase in diesem ausgefahrenen Zustand verharren oder den Wechsel der Bewegungsrichtung mit geringerer Geschwindigkeit ausführen. Hierdurch kann erreicht werden, dass im Vergleich zur Mitte des Mähdreschers mehr Stroh und Spreu in die äußeren Stoppelbereiche transportiert wird und dort verbleibt. Entsprechende Einstellungen der Streueinrichtung können auch bei einem auftretenden Seitenwind sinnvoll sein. Insgesamt lässt sich also je nach Ernteverhältnissen die Strohverteilung variieren. Dabei ist der Streubereich natürlich derart einzustellen, dass das Stroh-Spreu-Gemisch nicht teilweise in den Bestand gefördert wird.

Weiterhin kann mit diesem Antriebssystem die Pendelfrequenz, das heißt die Wiederholungshäufigkeit der vorgegebenen Pendelkurve variiert werden. Auch die Pendelfrequenz hat einen erheblichen Einfluss auf die Strohverteilung. Durch das entsprechende Steuersystem des Mähdreschers soll die Pendelfrequenz derart variiert werden, dass sich auch bei ungünstigen Erntebedingungen stets eine optimale Strohverteilung erzielen lässt. Schließlich kann zu diesem Zweck auch die Auslenkung der Streubleche verändert werden, so dass auch bei einem auftretenden Seitenwind erreicht wird, dass das Stroh-Spreu-Gemisch für den anschließenden Bodenbearbeitungsvorgang gleichmäßig auf den Stoppeln abgelegt ist.

Demgegenüber können mit dem rotierenden Exzenterantrieb nach der EP 1 277 387 A1 weder die Pendelkurve noch die Pendelfrequenz der Streubleche verändert werden. Mittels der Spindelverstellung lässt sich nur eine Grundeinstellung für die Lage der Streubleche zueinander vornehmen. Daraus resultiert aber keine Verstellung des gesamten Pendelbereichs, also des Bereichs zwischen einer minimalen und maximalen Auslenkung der Verteilbleche, oder einer Pendelfrequenz.

Erfindungsgemäß ist vorgesehen, den Linearantrieb als doppelt wirkenden Hydraulikzylinder auszubilden. Dieser Hydraulikzylinder wird über ein in diesen integriertes Wegeventil gesteuert und kann zum einen während seiner beiden Kolbenhübe mit unterschiedlichen Verfahrgeschwindigkeiten betrieben werden. Außerdem besteht die Möglichkeit, während des Betriebs der Einrichtung den Kolbenweg zu variieren, so dass sich die maximale Position der Streubleche verändert.

Weiterhin ist vorgesehen, dass der Hydraulikzylinder über ein 3/2-Wegeventil betätigbar ist, welches über einen Elektromagneten in eine erste Stellung und über mit dem Kolben oder einer Kolbenstange zusammenwirkenden Federmitteln in eine zweite Stellung verschiebbar ist. Die entsprechende mechanische Wegrückführung des Hydraulikzylinders, also die Übertragung von dessen Stellbewegung durch das Federmittel auf das 3/2-Wegeventil, führt dazu, dass das 3/2-Wegeventil nur durch einen Elektromagneten in einer Stellrichtung angesteuert wird. Wie bereits dargelegt, muss die Lineareinheit in einer schnellen Aufeinanderfolge Ein- und Ausfahrbewegungen ausführen, damit die Streubleche für eine gleichmäßige Verteilung des gehäckselten Stroh-Spreu-Gemisches auf den Stoppeln sorgen. Bei einer beidseitigen Betätigung eines in einem 4/3-Wegeventil vorgesehenen Steuerschiebers müssen zwei Elektromagnete bei jedem Doppelhub nacheinander definiert rauf- und wieder runtergefahren werden. Das führt dazu, dass bei einer Frequenz von 1,0 Hertz eine definierte Bestromung der beiden Elektromagneten und deren entsprechende Bewegung in jeweils nur 0,5 Sekunden erfolgen müssen. Demgegenüber wird erfindungsgemäß das 3/2-Wegeventil nur in seiner einen Bewegungsrichtung durch einen Elektromagneten angesteuert. Dadurch muss der Elektromagnet bei einer Frequenz von 1,0 Hertz innerhalb von 1,0 Sekunden seine durch die Bestromung erzeugte Bewegung ausführen. Es steht somit die doppelte Zeit zur Verfügung. Die in die Lineareinheit integrierte mechanische Wegrückführung bewirkt ein Kräftegleichgewicht zwischen dem Elektromagneten des Wegeventils und dem an der Kolbenstange befestigten Federmittel, so dass der Ventilschieber nur einen sehr kleinen Weg im Bereich der Ventilsteuerkanten ausführen muss.

In weiterer Ausgestaltung der Erfindung ist vorgesehen, dass in beiden Stellungen des 3/2-Wegeventils über einen ringförmigen Kolbenraum eine Kolbenringfläche des Hydraulikzylinders mit einem Arbeitsdruck beaufschlagt wird. Das bedeutet, dass ein eine Kolbenstange des Hydraulikzylinders umgebender Ringraum, der an einem Ende durch die Kolbenringfläche begrenzt wird, ständig aus einer Druckleitung eines Konstantdrucksystems mit dem Arbeitsdruck des Hydraulikmediums beaufschlagt wird. Ein Ventilschieber des 3/2-Wegeventils wird durch den Elektromagneten oder das Federmittel abwechselnd in eine seiner beiden Stellungen bewegt. Dabei kann, wie weiterhin vorgeschlagen, von einer an das 3/2-Wegeventils angeschlossenen Druckleitung ein Leitungszweig zum ringförmigen Kolbenraum geführt werden, das heißt, dass dieses Druckmittel das 3/2-Wegeventil nicht durchströmt.

In diesem Zusammenhang ist vorgesehen, dass in einer ersten Stellung des 3/2-Wegeventils ein zylindrischer Kolbenraum mit einem Tankanschluss verbunden ist, wohingegen in einer zweiten Stellung des 3/2-Wegeventils der zylindrische Kolbenraum mit dem Druckanschluss verbunden ist. In letzterer Stellung erfolgt also aus dem Konstantdrucksystem eine Beaufschlagung des Hydraulikzylinders sowohl am kreisringförmigen Kolbenraum als auch am kreisförmigen Kolbenraum. Die Folge davon ist, dass die in der zweiten Stellung des 3/2-Wegeventils aus dem Kolbenringraum verdrängte Ölmenge nicht über den Tankanschluss abgeleitet wird, sondern gemeinsam mit einer vergleichsweise geringen Druckmittelmenge aus dem Druckmittelanschluss in den zylindrischen Kolbenraum strömt und folglich die hydraulische Leistung zum Einfahren des Kolbens bei dessen anschließendem Ausfahren zurückgewonnen wird. Die ansonsten üblichen Drosselverluste beim Ableiten des Druckmediums in den Tank treten somit nicht auf. Gegenüber einer üblichen Steuerung eines doppelt wirkenden Hydraulikzylinders tritt damit der Vorteil ein, dass nunmehr nur noch die Leistung zum Ausfahren der Kolbenstange bereitgestellt werden muss, woraus eine deutliche Wirkungsgradverbesserung resultiert. Dieses System weist eine sehr hohe Dynamik und Wiederholgenauigkeit auf, was wiederum dazu führt, dass der Hydraulikzylinder mit weniger Leistungsreserven wesentlich kleiner ausgelegt werden kann. Dies führt zu einer weiteren Leistungseinsparung durch geringeren Ölverbrauch aus dem Konstantdrucksystem.

Das zuvor angegebene Federmittel kann in Weiterbildung der Erfindung als Zugfeder ausgebildet sein. Diese Zugfeder bewegt den Ventilschieber des 3/2-Wegeventils in seine erste Stellung, in welcher der kreisförmige Kolbenraum drucklos zum Tank entleert wird, während der Elektromagnet den Ventilschieber entgegen der Betätigungskraft der Zugfeder in die zweite Stellung bewegt, in der die beiden Kolbenräume miteinander verbunden sind und im Übrigen Druckmittel aus dem Konstantdrucksystem zugeführt wird. Alternativ dazu besteht natürlich auch die Möglichkeit, das Federmittel als Druckfeder auszubilden, wobei dann der Elektromagnet den Ventilschieber in Richtung des Kolbens beziehungsweise der Kolbenstange verschieben würde.

Weiterhin ist vorgesehen, dass über die Bestromung des Elektromagneten der Hubverlauf des Hydraulikzylinders und somit eine Pendelkurve der Streubleche einstellbar ist. Es können folglich die zuvor erläuterten unterschiedlichen Verteilkurven erzielt werden, bei denen es sich sowohl um eine sinusförmige Pendelkurve als auch um eine breite Pendelkurve, bei welcher der Hydraulikzylinder sehr schnell ausgefahren wird und länger im ausgefahrenen Zustand verharrt, handeln kann. Darüber hinaus bestehen Möglichkeiten, durch die Bestromung des Elektromagneten die Pendelfrequenz der Streubleche und somit die Streuverteilung oder die Auslenkung der Streubleche einzustellen. Zu diesem Zweck wird innerhalb des selbstfahrenden Mähdreschers eine Regeleinrichtung vorgesehen sein, der ein Istwert für die Verteilung des Stroh-Spreu-Gemisches zugeführt wird und mit einem vorgegebenen Sollwert vergleicht.

Außerdem ist vorgesehen, dass die jeweilige Streublechanordnung, die aus den zueinander verstellbaren Streublechen besteht, in ihrer zum Äußeren eines Ablagebereichs des Stroh-Spreu-Gemisches weisenden Bewegungsrichtung mit ihrer größten Beschleunigung betrieben wird und dass der Hydraulikzylinder derart mit der jeweiligen Streublechanordnung verbunden ist, dass diese Bewegung an ihrem Ende durch die zylindrische Kolbenfläche abgefangen wird. Dadurch lässt sich zum einen die Größe des Arbeitszylinders reduzieren und zum anderen eine nochmalige Leistungseinsparung erzielen.

Schließlich ist vorgesehen, dass im Rahmen einer Streublechanordnung, die aus zwei Streublechen besteht, ein erstes Streublech unmittelbar vom Hydraulikzylinder über einen Schwenkhebel und ein zweites Streublech durch eine Viergelenkkette vom Hydraulikzylinder angetrieben wird. Daher führt das zweite Streublech gegenüber dem zweiten Streublech einen kürzeren Verstellweg aus, was letztendlich zum Übereinanderschieben der Streubleche führt.

Des Weiteren kann der Mähdrescher eine Steuerungseinrichtung umfassen, die zur Ansteuerung des Linearantriebes in Abhängigkeit von einer voreinstellbaren Pendelkurve eingerichtet ist.

Insgesamt treten durch die vorgenannte Lösung folgende Vorteile ein: Die Hydraulik- und Elektronikkomponenten lassen sich mit geringeren Kosten realisieren. Aufgrund der gemeinsamen Druckmittelversorgung beider Kolbenräume entfallen Hydraulikleitungen. Die Dynamik und Steuerbarkeit des Antriebssystems wird verbessert. Es tritt eine deutliche Wirkungsgradverbesserung ein. Für die Ansteuerung des Ventilschiebers wird nur noch ein Elektromagnet benötigt. Aufgrund der Reduzierung der Bauteile werden auch die elektrohydraulischen Schnittstellen in Form von Steckverbindungen wesentlich reduziert.

Die Erfindung ist nicht auf die angegebene Kombination der Merkmale des unabhängigen Patentanspruchs 1 und der von diesem abhängigen Patentansprüche beschränkt. Es ergeben sich darüber hinaus Möglichkeiten, einzelne Merkmale, soweit sie aus den Patentansprüchen, den Vorteilsangaben zu den Patentansprüchen, der nachfolgenden Beschreibung des Ausführungsbeispiels oder zumindest aus den Zeichnungen hervorgehen, miteinander zu kombinieren. Die Bezugnahme der Patentansprüche auf die Zeichnung durch entsprechende Verwendung vom Bezugszeichen soll den Schutzumfang der Patentansprüche nicht beschränken.

Zur weiteren Erläuterung der Erfindung wird auf die Zeichnung verwiesen, in der ein Ausführungsbeispiel vereinfacht dargestellt ist. Es zeigen:
- Figur 1: als schematische Darstellung eine Heckansicht eines selbstfahrenden Mähdreschers, der am Bestand erntet und bei dem Stroh oder Strohhäcksel über eine erfindungsgemäß ausgebildete Streueinrichtung in der abgeernteten Spur verteilt wird,
- Figur 2: eine Draufsicht auf die Unterseite einer Verstelleinrichtung von zwei einer Schleudereinrichtung zugeordneten Streublechen in einer Stellung, in welcher ein Stroh-Spreu-Gemisch in einen Randbereich der abgeernteten Fläche geleitet wird,
- Figur 3: eine Stellung der beiden Streublechs, in welcher das Stroh-Spreu-Gemisch, ausgehend vom Randbereich über eine breitere Fläche abgelegt wird,
- Figur 4: eine Stellung der Streubleche, in welcher diese aus dem Streubereich herausgeschwenkt sind, so dass das Stroh-Spreu-Gemisch im Fall von zwei Schleudereinrichtungen über die Hälfte der abgeernteten Fläche verteilt wird,
- Figur 5: eine im Maßstab verkleinerte perspektivische Teilansicht einer im Rahmen der Erfindung verwendbaren Schleudereinrichtung und
- Figur 6: zwei aus Hydraulikzylindern bestehende erfindungsgemäße Verstelleinrichtungen für die Streubleche.

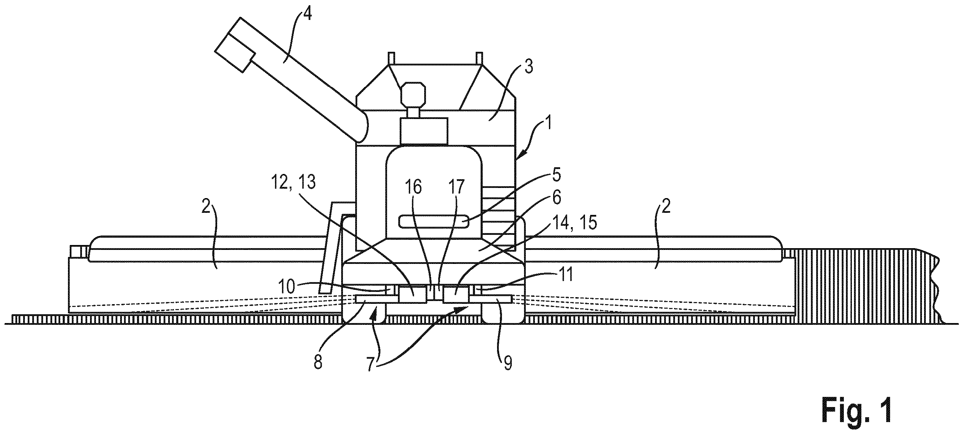

In der Figur 1 ist mit Bezugszeichen 1 ein selbstfahrender Mähdrescher bezeichnet, der in seinem Frontbereich einen vorzugsweise austauschbaren Erntevorsatz 2 aufnimmt. Dieser Erntevorsatz 2 weist eine relativ große Arbeitsbreite auf und erstreckt sich somit beidseitig in erheblichem Maße über die Breite des Mähdreschers 1, also über die Breite von dessen Fahrwerk, Dreschwerk usw. Bei dem Erntevorsatz 2 handelt es sich im vorliegenden Fall um ein Schneidwerk zur Ernte von Getreide oder Raps. Ferner weist der Mähdrescher 1 in seinem mittleren Bereich, hinter einer nicht näher dargestellten Fahrerkabine einen Korntank 3 auf, von welchem ein als Korntankauslaufrohr 4 ausgebildetes Förderrohr an einer, in Fahrtrichtung gesehen, linken Längsseite des Mähdreschers 1 ausgeht. Dieses Korntankauslaufrohr 4 ist in die in der Figur 1 dargestellte Stellung für eine Entleerung des Korntanks 3 ausschwenkbar. Das Korntankauslaufrohr 4 kann außerdem in eine Transportstellung überführt werden, in der es parallel zur Längserstreckung des Mähdreschers 1 verläuft.

Während der Getreide- oder Rapsernte gelangen das Getreide oder Rapsstroh sowie die Spreu in einem am heckseitigen Ende des Mähdreschers 1 vorgesehenen Austritt 5, dem ein Strohhäcksler 6 nachgeordnet ist. Dieser häckselt das Stroh in kurze Teile und führt diese einer erfindungsgemäß ausgebildeten Streueinrichtung 7 zu. Diese Streueinrichtung 7 besteht im vorliegenden Fall aus zwei Schleudereinrichtungen 8 und 9, die über vertikal verlaufende Antriebswellen 10 und 11 gegenläufig angetrieben werden und in entsprechenden Aufnahmekonsolen des selbstfahrenden Mähdreschers 1 gelagert sind. Der gegenläufige Antrieb bedeutet dabei, dass die Schleudereinrichtung 8, in der Draufsicht gesehen, im Uhrzeigersinn rotiert und die Schleudereinrichtung 9 im Gegenuhrzeigersinn angetrieben wird.

Wie weiterhin aus der Figur 1 hervorgeht, sind die beiden Schleudereinrichtungen 8 und 9 jeweils über einen Teil ihres Außenmantels von verstellbaren Streublechen 12, 13, 14 und 15 abgedeckt, wodurch der aus einem Stroh-Spreu-Gemisch bestehende Gutstrom in den äußeren Bereich der abgeernteten Stoppelfläche lenkbar ist. Außerdem befindet sich in einem zwischen den beiden Schleudereinrichtungen 8 und 9 liegenden Bereich ein Guttrennblech 16, das den mittels zweier spitzwinklig zueinander verlaufender Trennwände 17 von dem Strohhäcksler 6 zugeführten Gutstrom auf die beiden Schleudereinrichtungen 8 und 9 aufteilt. Die beiden Streubleche 12, 13, 14 und 15 sind, wie nachfolgend noch anhand der weiteren Figuren dargelegt werden wird, verstellbar ausgebildet, so dass durch deren pendelnde Bewegung das zerkleinerte Stroh-Spreu-Gemisch gleichmäßig auf den Stoppeln abgelegt werden kann. Eine gleichmäßige Ablage ist unbedingt erforderlich, damit das Gemisch beim anschließenden Bodenbearbeitungsvorgang gleichmäßig in den Boden eingearbeitet werden kann und somit vermieden wird, dass sich im Boden Strohnester bilden.

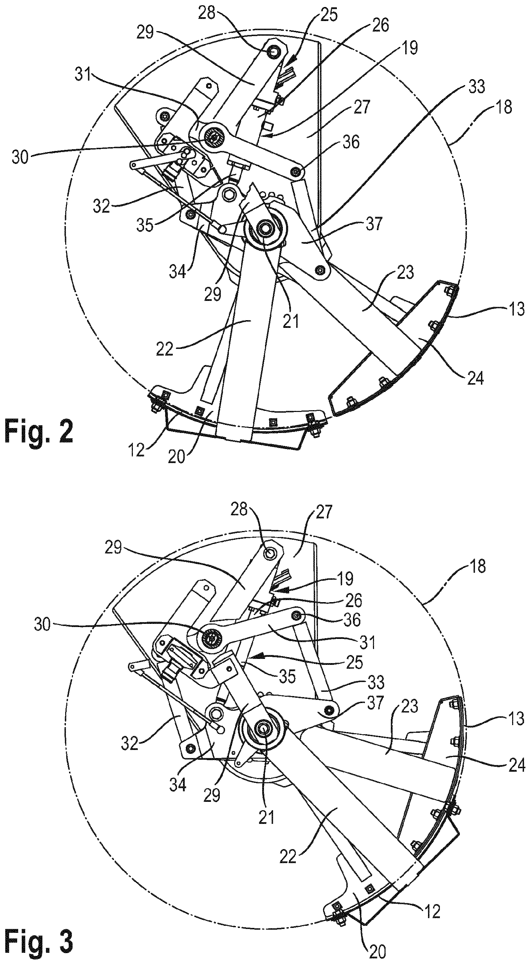

In den Figuren 2, 3 und 4 ist als Beispiel durch einen strichpunktierten Kreis ein Außenmantel 18 der Schleudereinrichtung 8 dargestellt. Die nachfolgend beschriebene Anordnung und Verstellung der Streubleche 12 und 13 dieser Schleudereinrichtung 8 erfolgt mittels einer Verstelleinrichtung 19, wobei die Streubleche 12 und 13 sowohl ihre Lage zum Außenmantel 18 als auch zueinander verändern.

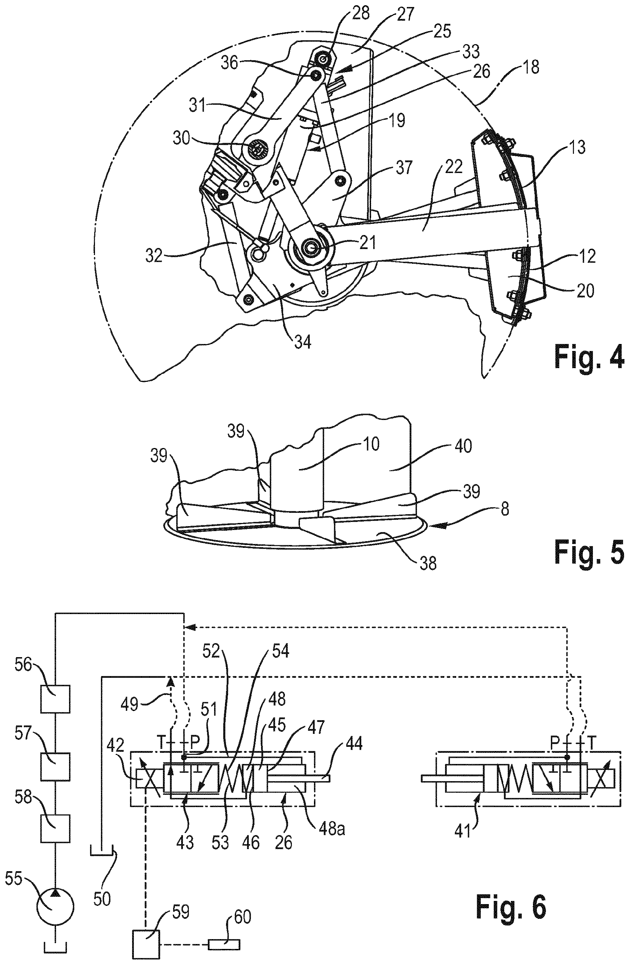

In der Figur 2 nehmen die Streubleche 12 und 13 eine Lage ein, in der sie soweit teleskopartig zueinander verstellt sind, dass sie einen maximalen Bereich des Außenmantels 18 umschließen. Außerdem nehmen sie zum Außenmantel 18 eine Lage ein, in der der Gutstrom primär in einen äußeren, also linken Bereich der abgeernteten Stoppelfläche geleitet wird. Demgegenüber überlappen sich die Streubleche 12 und 13 nach der Figur 3, wobei aufgrund deren Lage der Streubereich vergrößert ist. Schließlich überdecken sich die beiden Streubleche 12 und 13 nach der Figur 4 vollständig, wobei der Streubereich seine größte Breite aufweist. Die entsprechenden Verstellbewegungen werden als zyklische Pendelbewegung mit hoher Geschwindigkeit ausgeführt, um den Gutstrom gleichmäßig zu verteilen.

Jedes der Streubleche 12 und 13 ist gekrümmt ausgebildet und verläuft dabei konzentrisch zum Außenmantel 18. An einer Innenseite des Streublechs 12 befindet sich eine Konsole 20, an der ein auf einer Welle 21 gelagerter Schwenkhebel 22 angreift. In der gleichen Weise ist das Streublech 13 mit einem weiteren Schwenkhebel 23 versehen, der einerseits an deren Konsole 24 und andererseits ebenfalls an der Welle 21 angreift. Damit die beiden Schwenkhebel 22 und 23 unterschiedliche Schwenkbewegungen ausführen können und auch in eine überlappende oder identische Lage bringbar sind, verlaufen sie in axialer Richtung versetzt zueinander auf der Welle 21. Auch die beiden Konsolen 20 und 24 sind derart in axialer Richtung zueinander versetzt, dass sie sich aneinander vorbeibewegen können.

Erfindungsgemäß ist Bestandteil der Verstelleinrichtung 19 ein Linearantrieb 25, der als Hydraulikzylinder 26 ausgebildet ist. Eine von einem Rahmenteil des selbstfahrenden Mähdreschers 1 oder des Strohhäckslers 6 ausgehende Traverse 27 nimmt sowohl die Welle 21 als auch ein ortsfestes Schwenklager 28 des Hydraulikzylinders 26 auf. Weiterhin greift sowohl an diesem ortsfesten Schwenklager 28 als an der Welle 21 ein Koppelelement 29 an, das über ein Schwenklager 30 einen zweiarmigen Hebel 31 aufnimmt. An den Enden dieses zweiarmigen Hebels 31 sind Koppelstangen 32 und 33 schwenkbar geführt, von denen die eine Koppelstange 32 schwenkbar mit einem ersten Hebel 34 verbunden ist, an dem eine Kolbenstange 35 des Hydraulikzylinders 26 angreift und der mit dem Schwenkhebel 23 verbunden ist. Die andere Koppelstange 33 ist über ein Gelenk 36 mit einem Ende des zweiarmigen Hebels 31 verbunden und greift an einem zweiten Hebel 37 an, der wiederum mit dem Schwenkhebel 22 verbunden ist. Somit ergibt sich insgesamt eine geometrisch als Parallelogramm ausgebildete Viergelenkkette, über die die beiden Schwenkhebel 22 und 23 und somit die Streubleche 12 und 13 zueinander unterschiedliche Schwenkbewegungen ausführen können, aus denen insgesamt eine teleskopartige Umfangsverstellung resultiert.

In der weiteren Figur 5 ist eine Teilansicht einer möglichen Ausgestaltung der Schleudereinrichtung 8 dargestellt, wobei zur Verdeutlichung von deren Ausbildung und Funktion auf die Darstellung der Streubleche 12 und 13 verzichtet wurde. Die Schleudereinrichtung weist demnach eine Schleuderscheibe 38 mit darauf angeordneten Mitnehmern 39 auf. Diese Schleuderscheibe 38 wird von der Antriebswelle 10 aufgenommen, wobei sich im rückwärtigen Bereich der entsprechenden Schleudereinrichtung 8 ein Leitblech 40 befindet, das beispielsweise einstückig mit dem vorgenannten Guttrennblech 16 ausgebildet sein kann. Die entsprechende Schleuderscheibe 38 rotiert und erfasst mit ihren Mitnehmern 39 das aus dem Strohhäcksler 6 austretende Stroh-Spreu-Gemisch und fördert dieses in einer im Wesentlichen horizontalen Ebene.

In der Figur 6 sind eine Ausbildung des Hydraulikzylinders 26 sowie eines weiteren Hydraulikzylinders 41, der der zuvor beschriebenen Schleudereinrichtung 9 zugeordnet sein soll, sowie ein diese beiden Hydraulikzylinder 26 und 41 mit Druckmittel versorgenden Hydrauliksystem dargestellt. Beide Hydraulikzylinder 26 und 41 sind identisch ausgebildet, und deren Aufbau und Funktionsweise soll daher nur anhand des Hydraulikzylinders 26 erläutert werden.

Der Hydraulikzylinder 26 ist als elektrohydraulisch proportional ansteuerbare Verstelleinheit ausgebildet, welche mit diesem ein über einen Elektromagneten 42 steuerbares 3/2-Wegeventil 43 eine Einheit bilden soll. Der Hydraulikzylinder 26 ist doppelt wirkend, das heißt, ein mit einer Kolbenstange 44 verbundener Kolben 45 ist sowohl an einer Kreisfläche 46 als auch an einer Kreisringfläche 47 mit einem Arbeitsdruck beaufschlagbar. Wie dem gemeinsamen Symbol für den Hydraulikzylinder 26 und das 3/2-Wegeventil entnommen werden kann, ist in dessen erster Schaltstellung über einen Pumpenanschluss P nur die Kreisringfläche 47 mit einem Arbeitsdruck aus einem Konstantdrucksystem beaufschlagt, während die Kreisfläche 46 druckentlastet ist, so dass also eine Hydraulikflüssigkeit aus einem zylindrischen Druckraum 48, die durch die Kreisfläche 46 des Kolbens 45 begrenzt wird, drucklos über eine Tankleitung 49 in einen Tank 50 abfließt. In einer in der Figur 6 dargestellten zweiten Schaltstellung des 3/2-Wegeventils 43, in welche dieses mittels des Elektromagneten 42 bewegt wird, ist der Pumpenanschluss P über Leitungen 51 und 52 sowohl mit dem zylindrischen Druckraum 48 als auch mit einem der Kreisringfläche 47 des Kolbens 45 zugewandten ringförmigen Druckraum 48a verbunden. Da der Ventilschieber des 3/2-Wegeventils 43 über ein als Zugfeder 53 ausgebildetes Federmittel 54 an den Kolben 45 gekoppelt ist, wird beim Erreichen einer Endposition des Kolbens das 3/2-Wegeventil 43 wieder in seine erste Stellung verstellt.

Weiterhin geht aus der Figur 6 hervor, dass die aus dem 3/2-Wegeventil 43 und dem Hydraulikzylinder 26 bestehende Einheit an ein mit einem Konstantdruck betriebenes Hydrauliksystem angeschlossen sein soll, das eine Pumpe 55 aufweist und zumindest weitere Verbraucher 56, 57 und 58 aufweist. Der Elektromagnet 42 wird außerdem über eine Steuer- beziehungsweise Regeleinrichtung 59 betätigt, die beispielsweise mit Sensoren 60, die die Streubreite ermitteln, verbunden sein. Die Steuer- oder Regeleinrichtung 59 steuert die Lineareinheit 25 in Abhängigkeit von einer voreinstellbaren Pendelkurve an. Die Pendelkurve wird durch den Verlauf der Bestromung beschrieben, mit welcher der Elektromagnet 42 bestromt wird. Die Auswahl unterschiedlicher Pendelkurven erlaubt eine einfache Anpassung an unterschiedliche Ernteverhältnisse. Hierzu sind die Pendelkurven in der Steuer- oder Regeleinrichtung 59 hinterlegt und durch eine Bedienperson mittels einer Ein- und Ausgabeeinheit, die mit der Steuer- oder Regeleinrichtung 59 verbunden ist, auswählbar. So kann beispielsweise eine Pendelkurve auswählbar sein, welche für das Einfahren und Ausfahren der durch die Lineareinheit oszillierend betätigten Pendelbleche gleich ist. Erreicht wird dies durch eine entsprechende Bestromung des Elektromagneten 42, wobei der Verlauf des Stroms beispielsweise sinusförmig ausgeprägt sein kann. Entsprechend dem sinusförmigen Strom wird die Lineareinheit 25 derart angesteuert, dass das Ausfahren des Hydraulikzylinders 26 dem sinusförmigen Verlauf des Stroms folgt.

Weiterhin kann eine Pendelkurve auswählbar sein, welche ein schnelles Ausfahren des Hydraulikzylinders 26 bewirkt, diesen aber für einen definierbaren Zeitraum in seiner ausgefahrenen Stellung verharren lässt, bevor der Hydraulikzylinder 26 wieder eingefahren wird. Hierdurch lässt sich erreichen, dass ein größerer Anteil an Stroh und Spreu in den äußeren Verteilbereichen der Schleudereinrichtungen 8 und 9 ausgebracht wird, als in der Mitte zwischen diesen. Es sind viele Variationen der Stromverläufe zur Bestromung der Magnetventile 42 denkbar, die das Einstellen unterschiedlicher Pendelkurven durch die Bedienperson ermöglichen. Neben einer Auswahl aus einer vorgegebenen Anzahl von Pendelkurven besteht auch die Möglichkeit, dass die Bedienperson durch eine Eingabe mittels der einer Ein- und Ausgabeeinheit eine ausgewählte Pendelkurve variiert und diese Einstellung in einem Speichermodul der Steuer- oder Regeleinrichtung 59 abspeichert. Die Steuer- oder Regeleinrichtung 59 bestimmt anhand des Verlaufes der Pendelkurve eine korrespondierenden Stromverlauf, mit dem das Magnetventil 42 angesteuert wird. Darüber hinaus lassen sich für die jeweilige Schleudereinrichtung 8 und 9 individuelle Pendelkurven auswählen beziehungsweise individuell modifizieren, um eine größtmögliche Variabilität bei der Ansteuerung auf Grund der jeweils vorherrschenden Erntebedingungen zu erreichen.

Ein weiterer Aspekt besteht in der Anpassung der Streubleche 12, 13, 14, 15 hinsichtlich ihrer minimalen und maximalen Auslenkung durch die Lineareinheit 25. Die minimale und maximale Auslenkung dienen der Realisierung der Stellgrößen Streubreite, Streurichtung und Mittenüberlappung. Um zu gewährleisten, dass der voreingestellte Bereich, das heißt der Hub des Hydraulikzylinders 26, ausgenutzt wird, kann der Hub mittels eines Winkelsensors überwacht werden. Der Winkelsensor erfasst über eine vorgebbare Anzahl von Hüben die minimale und maximale Auslenkung. Die die Auslenkung repräsentierenden Signale werden der Steuer- oder Regeleinrichtung 59 zugeführt, welche Mittelwerte für die die minimale und maximale Auslenkung bestimmt. Weicht die erfasste mittlere Auslenkung von vorgegebenen Soll-Werten für die minimale und maximale Auslenkung ab, so können diese korrigiert werden.

Bei der Verwendung dieses 3/2-Wegeventils 43 muss dieses in sehr kurzen Intervallen, das heißt, beispielsweise in jeweils 0,25 Sekunden, von einer der Schaltstellungen in die andere überführt werden. Durch die erfindungsgemäße Lösung wird erreicht, dass die Bestromung des Elektromagneten 42 nur einmal innerhalb der Gesamtdauer des Doppelhubes, also beispielsweise in 0,5 Sekunden erfolgen muss. Außerdem wird durch die entsprechende Verbindung des ringförmigen Druckraumes 48a mit dem zylindrischen Druckraum 48 über das 3/2-Wegeventil 43 erreicht, dass die aus dem Konstantdrucksystem zunächst in den ringförmigen Druckraum 48 a zugeführte Ölmenge in den zylindrischen Druckraum 48 überführt wird. Dadurch tritt eine erhebliche Wirkungsgradverbesserung ein und die Drosselverluste der drucklos in den Tank abgeleiteten Hydraulikflüssigkeit werden insgesamt verringert.

### Bezugszeichen

- 1: selbstfahrender Mähdrescher
- 2: Erntevorsatz
- 3: Korntank
- 4: Korntankauslaufrohr
- 5: Austritt
- 6: Strohhäcksler
- 7: Streueinrichtung
- 8: Schleudereinrichtung
- 9: Schleudereinrichtung
- 10: Antriebswelle
- 11: Antriebswelle
- 12: Streublech
- 13: Streublech
- 14: Streublech
- 15: Streublech
- 16: Guttrennblech
- 17: Trennwände
- 18: Außenmantel von 8
- 19: Verstelleinrichtung
- 20: Konsole
- 21: Welle
- 22: Schwenkhebel
- 23: Schwenkhebel
- 24: Konsole
- 25: Linearantrieb
- 26: Hydraulikzylinder
- 27: Traverse
- 28: Ortsfestes Schwenklager
- 29: Koppelelement
- 30: Schwenklager
- 31: Zweiarmiger Hebel
- 32: Koppelstange
- 33: Koppelstange
- 34: Erster Hebel
- 35: Kolbenstange von 26
- 36: Gelenk
- 37: Zweiter Hebel
- 38: Schleuderscheibe
- 39: Mitnehmer
- 40: Leitblech
- 41: Hydraulikzylinder
- 42: Elektromagnet
- 43: 3/2-Wegeventil
- 44: Kolbenstange
- 45: Kolben
- 46: Kreisfläche
- 47: Kreisringfläche
- 48: zylindrischer Druckraum
- 48a: ringförmiger Druckraum
- 49: Tankleitung
- 50: Tank
- 51: Leitung
- 52: Leitung
- 53: Zugfeder
- 54: Federmittel
- 55: Pumpe
- 56: Verbraucher
- 57: Verbraucher
- 58: Verbraucher
- 59: Steuer- oder Regelungseinrichtung
- 60: Sensor

## Patentansprüche

1. Selbstfahrender Mähdrescher (1) mit einem heckseitigen Austritt (5) für ein Stroh-Spreu-Gemisch, welches durch aus wenigstens einer angetriebenen Schleudereinrichtung (8, 9), insbesondere aus wenigstens zwei angetriebenen Schleudereinrichtungen (8, 9), bestehende Streueinrichtung (7), die dem Austritt (5) nachgeordnet ist, über die Arbeitsbreite des Mähdreschers (1) verteilt wird, wobei an jeder der Schleudereinrichtungen (8, 9) zur Lenkung des Gutstromes eine aus zumindest zwei verstellbaren Streublechen (12, 13, 14, 15) bestehende radiale Teilummantelung angeordnet ist und wobei die Streubleche (12, 13, 14, 15) über eine Verstelleinrichtung (19) zueinander und in Bezug auf den jeweiligen Teilbereich eines Außenmantels (18) der Schleudereinrichtung (8, 9) fortlaufend verstellbar sind, wobei die mit unterschiedlichem radialen Abstand zu der Streueinrichtung (7) angeordneten Streubleche (12, 13, 14, 15) partiell oder insgesamt übereinander geschoben werden, wobei die Verstelleinrichtung (19) einen oszillierend bewegten Linearantrieb (25) mit einer in diesen integrierten mechanischen Wegrückführung (54) aufweist, **dadurch gekennzeichnet, dass** der Linearantrieb (25) als doppelt wirkender Hydraulikzylinder (26) ausgebildet ist, und die mechanische Wegrückführung(54) des Hydraulikzylinders (26) einer Übertragung einer Stellbewegung des Hydraulikzylinders (26) durch ein Federmittel auf ein 3/2-Wegeventil (43) entspricht, die dazu führt, das das 3/2-Wegeventil (43) nur durch einen Elektromagneten (42) in einer Stellrichtung angesteuert wird, so dass der Hydraulikzylinder (26) über das 3/2-Wegeventil (43) betätigbar ist, welches über den Elektromagneten (42) in eine erste Stellung und über mit einem Kolben (45) oder mit einer Kolbenstange (44) des Hydraulikzylinders (41) zusammenwirkenden Federmitteln (54) in eine zweite Stellung verschiebbar ist.

2. Selbstfahrender Mähdrescher nach Patentanspruch 1, **dadurch gekennzeichnet, dass** in beiden Stellungen des 3/2-Wegeventils (43) eine Kreisringfläche (47) des Kolbens (45) mit einem Arbeitsdruck beaufschlagt wird.

3. Selbstfahrender Mähdrescher nach Patentanspruch 2, **dadurch gekennzeichnet, dass** von einer an das 3/2-Wegeventil (43) angeschlossenen Druckleitung (51) ein Leitungszweig (52) zum ringförmigen Druckraum (48a) führt, dass in einer ersten Stellung des 3/2-Wegeventils (43) ein zylindrischer Druckraum (48) mit einem Tankanschluss (T) verbunden ist und dass in dessen zweiter Stellung der zylindrische Druckraum (48) mit dem Druckanschluss (P) verbunden ist.

4. Selbstfahrender Mähdrescher nach Patentanspruch 1, **dadurch gekennzeichnet, dass** das Federmittel (54) als Zugfeder (53) oder als Druckfeder ausgebildet ist.

5. Selbstfahrender Mähdrescher nach Patentanspruch 1, **dadurch gekennzeichnet, dass** über die Bestromung des Elektromagneten (42) der Hubverlauf des Hydraulikzylinders (41) und somit eine Pendelkurve der Streubleche (12, 13, 14, 15) einstellbar ist.

6. Selbstfahrender Mähdrescher nach Patentanspruch 1, **dadurch gekennzeichnet, dass** über die Bestromung des Elektromagneten (42) die Pendelfrequenz der Streubleche (12, 13, 14, 15) und somit die Strohverteilung einstellbar ist.

7. Selbstfahrender Mähdrescher nach Patentanspruch 1, **dadurch gekennzeichnet, dass** über die Bestromung des Elektromagneten (42) die Auslenkung der Streubleche (12, 13, 14, 15) einstellbar ist.

8. Selbstfahrender Mähdrescher nach Patentanspruch 2, **dadurch gekennzeichnet, dass** die jeweilige Streublechanordnung (12, 13, 14, 15) in ihrer zum Äußeren eines Ablagebereichs des Strohs weisenden Bewegungsrichtung mit ihrer größten Beschleunigung betrieben wird und dass der Hydraulikzylinder (41) derart mit der jeweiligen Streublechanordnung(12, 13, 14, 15) verbunden ist, dass diese Bewegung an ihrem Ende durch die Kreisfläche (46) des Kolbens (45) abgefangen wird.

9. Selbstfahrender Mähdrescher nach Patentanspruch 1, **dadurch gekennzeichnet, dass** im Rahmen einer Streublechanordnung (12, 13, 14, 15) ein erstes Streublech (12, 14) unmittelbar vom Hydraulikzylinder (41) über einen Schwenkhebel (34) und ein zweites Streublech (13, 15) über eine Viergelenkkette vom Hydraulikzylinder (41) angetrieben wird.

10. Selbstfahrender Mähdrescher nach einem der Patenansprüche 1 bis 9, **dadurch gekennzeichnet, dass** der Mähdrescher eine Steuerungseinrichtung (59) umfasst, die zur Ansteuerung des Linearantriebes (25) in Abhängigkeit von einer voreinstellbaren Pendelkurve eingerichtet ist.

## Claims

1. A self-propelled combine harvester (1) having a rear-end outlet (5) for a straw-chaff mixture which is distributed over the working width of the combine harvester (1) by a scatter device (7) which comprises at least one driven centrifugal device (8, 9) and in particular at least two driven centrifugal devices (8, 9) and which is arranged downstream of the outlet (5), wherein arranged at each of the centrifugal devices (8, 9) for deflecting the flow of crop material is a radial partial casing comprising at least two adjustable scatter plates (12, 13, 14, 15) and wherein the scatter plates (12, 13, 14, 15) are continuously adjustable by way of an adjusting device (19) relative to each other and in relation to the respective partial region of an outer casing (18) of the centrifugal device (8, 9) wherein the scatter plates (12, 13, 14, 15) which are arranged at a differing radial spacing relative to the scatter device (7) are partially or totally pushed over each other, wherein the adjusting device (19) has an oscillatingly moved linear drive (25) with a mechanical position feedback (54) integrated into same, **characterised in that** the linear drive (25) is in the form of a double-acting hydraulic cylinder (26) and the mechanical position feedback (54) of the hydraulic cylinder (26) corresponds to a transmission of an adjusting movement of the hydraulic cylinder (26) by a spring means to a 3/2-way valve (43), which leads to the 3/2-way valve (43) being actuated only by a solenoid (42) in an adjusting direction so that the hydraulic cylinder (26) is actuable by way of the 3/2-way valve (43) which is displaceable by the solenoid (42) into a first position and by way of spring means (54) cooperating with a piston (45) or with a piston rod (44) of the hydraulic cylinder (41) into a second position.

2. A self-propelled combine harvester according to claim 1 **characterised in that** an annular surface (47) of the piston (45) is acted upon with a working pressure in both positions of the 3/2-way valve (43).

3. A self-propelled combine harvester according to claim 2 **characterised in that** a branch conduit (52) leads from a pressure conduit (51) connected to the 3/2-way valve (43) to the annular pressure chamber (48a), that in a first position of the 3/2-way valve (43) a cylindrical pressure chamber (48) is connected to a tank connection (T) and that in the second position thereof the cylindrical pressure chamber (48) is connected to the pressure connection (P).

4. A self-propelled combine harvester according to claim 1 **characterised in that** the spring means (54) is in the form of a tension spring (53) or a compression spring.

5. A self-propelled combine harvester according to claim 1 **characterised in that** the stroke displacement of the hydraulic cylinder (41) and thus a swing curve of the scatter plates (12, 13, 14, 15) is adjustable by way of the energisation of the solenoid (42).

6. A self-propelled combine harvester according to claim 1 **characterised in that** the swing frequency of the scatter plates (12, 13, 14, 15) and thus the straw distribution can be adjusted by way of the energisation of the solenoid (42).

7. A self-propelled combine harvester according to claim 1 **characterised in that** the deflection of the scatter plates (12, 13, 14, 15) is adjustable by way of the energisation of the solenoid (42).

8. A self-propelled combine harvester according to claim 2 **characterised in that** the respective scatter plate arrangement (12, 13, 14, 15) is operated with its greatest acceleration in its direction of movement facing towards the exterior of the straw deposit region and that the hydraulic cylinder (41) is so connected to the respective scatter plate arrangement (12, 13, 14, 15) that said movement is intercepted at its end by the circular surface (46) of the piston (45).

9. A self-propelled combine harvester according to claim 1 **characterised in that** in the context of a scatter plate arrangement (12, 13, 14, 15) a first scatter plate (12, 14) is driven directly by the hydraulic cylinder (41) by way of a pivot lever (34) and a second scatter plate (13, 15) is driven by the hydraulic cylinder (41) by way of a four-bar chain.

10. A self-propelled combine harvester according to one of claims 1 to 9 **characterised in that** the combine harvester includes a control device (59) which is adapted to actuate the linear drive (25) in dependence on a pre-adjustable swing curve.

## Revendications

1. Moissonneuse-batteuse automotrice (1) comprenant une sortie arrière (5) pour un mélange paille-balle qui est épandu sur la largeur de travail de la moissonneuse-batteuse (1) par l'intermédiaire d'au moins un équipement d'éparpillement (7), lequel est constitué d'au moins un équipement d'éjection entraîné (8, 9), en particulier d'au moins deux équipements d'éjection entraînés (8, 9), et est disposé en aval de la sortie (5), sur chacun des équipements d'éjection (8, 9) étant disposé, pour orienter le flux de produit, un moyen radial partiellement enveloppant constitué d'au moins deux tôles d'éparpillement réglables (12, 13, 14, 15), et les tôles d'éparpillement (12, 13, 14, 15) étant réglables en continu, par l'intermédiaire d'un équipement de réglage (19), l'une par rapport à l'autre et par rapport à la zone partielle respective d'une enveloppe extérieure (18) de l'équipement d'éjection (8, 9), les tôles d'éparpillement (12, 13, 14, 15) disposées avec une distance radiale différente par rapport à l'équipement d'éparpillement (7) étant poussées partiellement ou totalement l'une sur l'autre, l'équipement de réglage (19) comportant un moyen d'entraînement linéaire à mouvement oscillant (25) avec un moyen mécanique intégré de réinjection de course (54), **caractérisée en ce que** le moyen d'entraînement linéaire (25) est conformé en vérin hydraulique à double effet (26), et le moyen mécanique de réinjection de course (54) du vérin hydraulique (26) correspond à un transfert d'un mouvement de positionnement du vérin hydraulique (26) par un moyen élastique à une valve à 3/2 voies (43), lequel a pour effet que la valve à 3/2 voies (43) n'est commandée que par l'intermédiaire d'un électro-aimant (42) dans une direction de positionnement, de sorte que le vérin hydraulique (26) est actionnable par l'intermédiaire de la valve à 3/2 voies (43), laquelle est déplaçable, par l'intermédiaire des électro-aimants (42), vers une première position et, par l'intermédiaire de moyens élastiques (54) coopérant avec un piston (45) ou avec une tige de piston (44) du vérin hydraulique (41), vers une seconde position.

2. Moissonneuse-batteuse automotrice selon la revendication 1, **caractérisée en ce que** dans les deux positions de la valve à 3/2 voies (43), une surface annulaire (47) du piston (45) est soumise à une pression de travail.

3. Moissonneuse-batteuse automotrice selon la revendication 2, **caractérisée en ce qu'**à partir d'une conduite de pression (51) reliée à la valve à 3/2 voies (43), une branche de conduite (52) mène à l'espace de pression annulaire (48a), **en ce que**, dans une première position de la valve à 3/2 voies (43), un espace de pression cylindrique (48) est relié à un raccord de réservoir (T), et **en ce que**, dans la seconde position de celle-ci, l'espace de pression cylindrique (48) est relié au raccord de pression (P).

4. Moissonneuse-batteuse automotrice selon la revendication 1, **caractérisée en ce que** le moyen élastique (54) est conformé en ressort de traction (53) ou en ressort de pression.

5. Moissonneuse-batteuse automotrice selon la revendication 1, **caractérisée en ce que** la course du vérin hydraulique (41) et donc une courbe pendulaire des tôles d'éparpillement (12, 13, 14, 15) est réglable par l'intermédiaire de l'alimentation électrique des électro-aimants (42) .

6. Moissonneuse-batteuse automotrice selon la revendication 1, **caractérisée en ce que** la fréquence pendulaire des tôles d'éparpillement (12, 13, 14, 15) et donc l'épandage de la paille est réglable par l'intermédiaire de l'alimentation électrique des électro-aimants (42) .

7. Moissonneuse-batteuse automotrice selon la revendication 1, **caractérisée en ce que** le débattement des tôles d'éparpillement (12, 13, 14, 15) est réglable par l'intermédiaire de l'alimentation électrique des électro-aimants (42) .

8. Moissonneuse-batteuse automotrice selon la revendication 2, **caractérisée en ce que** l'agencement de tôles d'éparpillement respectif (12, 13, 14, 15) est actionné avec son accélération maximale dans sa direction de déplacement tournée vers l'extérieur d'une zone de dépôt de la paille, et **en ce que** le vérin hydraulique (41) est relié à l'agencement de tôles d'éparpillement respectif (12, 13, 14, 15), de façon que ce déplacement soit intercepté à son terme par la surface circulaire (46) du piston (45).

9. Moissonneuse-batteuse automotrice selon la revendication 1, **caractérisée en ce que**, dans le cadre d'un agencement de tôles d'éparpillement (12, 13, 14, 15), une première tôle d'éparpillement (12, 14) est entraînée directement par le vérin hydraulique (41) par l'intermédiaire d'un levier pivotant (34), et une seconde tôle d'éparpillement (13, 15) est entraînée par le vérin hydraulique (41) par l'intermédiaire d'une cinématique à quatre articulations.

10. Moissonneuse-batteuse automotrice selon une des revendications 1 à 9, **caractérisée en ce que** la moissonneuse-batteuse comporte un équipement de commande (59) qui est agencé pour commander le moyen d'entraînement linéaire (25) en fonction d'une courbe pendulaire préréglable.
